# EUROPÄISCHE PATENTSCHRIFT

(11) **EP 1 355 749 B1**
(45) Veröffentlichungstag und Bekanntmachung des Hinweises auf die Patenterteilung: **10.08.2005**
(21) Anmeldenummer: 01989540.8
(22) Anmeldetag: 29.11.2001
(51) Int. Cl.: B21D 26/02, B21D 22/04

(54) **VERFAHREN ZUM ANBRINGEN EINES FUNKTIONSELEMENTES AN EIN VERFORMBARES METALLTEIL UNTER ANWENDUNG EINES HOCHDRUCKUMFORMVERFAHRENS, ZUSAMMENBAUTEIL UND MATRIZE**
METHOD FOR THE APPLICATION OF A FUNCTION ELEMENT TO A MOULDABLE METAL PIECE USING A HIGH PRESSURE MOULDING PROCESS, ASSEMBLED PIECE AND DIE
PROCEDE DE MONTAGE D'UN ELEMENT DE FONCTION SUR UNE PIECE DE METAL DEFORMABLE A L'AIDE D'UN PROCEDE DE FORMAGE SOUS HAUTE PRESSION, PIECE ASSEMBLEE ET MATRICE

(30) Priorität: 01.02.2001 DE 10104549
(43) Veröffentlichungstag der Anmeldung: 29.10.2003
(73) Patentinhaber: Profil Verbindungstechnik GmbH & Co. KG, 61381 Friedrichsdorf (DE)
(72) Erfinder: HUMPERT, Richard, 61191 Rosbach v.d.H. (DE)
(74) Vertreter: Manitz, Finsterwald & Partner GbR
(86) Internationale Anmeldenummer: PCT/EP2001/013979
(87) Internationale Veröffentlichungsnummer: WO 2002/060613

(56) Entgegenhaltungen:
- EP-A- 0 993 902
- WO-A-01/03881
- DE-A- 19 508 632
- DE-A- 19 733 477

## Beschreibung

Die vorliegende Erfindung betrifft ein Verfahren zum Anbringen eines Funktionselements an ein verformbares Metallteil unter Anwendung eines Hochdruckumformverfahrens, bei dem das Metallteil auf der dem abgestützten Funktionselement abgewandteri Seite mit einem Fluiddruck belastet und in einen Umformvorgang um mindestens einen Abschnitt des Funktionselementes herum und im Bereich einer sich radial nach innen erstreckenden Fläche des Funktionselementes, die der am Metallteil anliegenden Stirnseite des Funktionselementes abgewandt ist, zu einer ringförmigen radial nach innen gerichteten Ringfalz umgeformt wird, wobei das Funktionselement während dieses Umformvorganges abgestützt wird sowie ein durch dieses Verfahren hergestelltes Zusammenbauteil.

Ein Verfahren, der Eingangs genannten Art ist aus der DE-OS 19508632 Al bekannt. Dort wird ein Funktionselement in Form eines Mutterelementes an einem Blechformteil mittels eines (Innen-) Hochdruckumfomvorganges angebracht. Das Mutterelement wird von einem beweglichen Dorn während des Umformvorganges abgestützt und dieser Dorn hat einen am Gewinde vorgesehenen Vorsprung, der in das Mutterelement vor der Durchführung des Umformvorganges eingeschraubt wird. Durch Anbringung eines Umformdruckes auf der dem Dorn abgewandten Seite des Metallteils wird das Metall gegen die Stirnseite des Mutterelementes und um deren gerundete Außenkontur umgeformt und zu einem Ringfalz umgebildet, der in eine ringförmige Hinterschneidung eindringt, die zwischen dem Mutterelement und dem Dorn sich befindet. Durch eine Rückzugsbewegung des Dorns und damit auch der Mutter werden noch nicht vollends vom Blechformteilwerkstoff ausgefüllte Bereiche der Hinterschneidung verpreßt. Es wird anschließend der Dorn vom Mutterelement durch eine überlagerte Dreh- und damit Rückzugsbewegung des Stempels erreicht, so daß nach einem Öffnen des Werkzeuges, die zu einem Zusammenbauteil forrnschlüssig verbundenen Bauteile (Blechformteil und Mutterelement) gemeinsam aus dem Werkzeug entnommen werden können.

Ein Formschluß gegen Belastung mit Drehmomenten kann durch eine Mehrkantform an der Mutter erreicht werden.

Bei einer Ausführungsform weist der Gewindezapfen des Dornes eine gegenüber der Mutter geringere Höhe auf und des weiteren weist die Mutter in ihrer dem Blechformteil zugewandten Seite eine Ausnehmung auf, wodurch unter der Einwirkung des Umformdruckes ein Butzen aus dem Blechformteil herausgetrennt wird, so daß eine später in das Mutterelement eingeführte Schraube auch über die Stirnseite des Mutterelementes hinausragen kann.

Aufgabe der vorliegenden Erfindung ist es, ein Verfahren der eingangs genannten Art zu verbessern, so daß es leichter durchführbar ist und so daß eine deutlich festere Anbringung des Funktionselementes am Metallteil erfolgt und eine bessere Verdrehsicherung erreicht werden kann.

Zur Lösung dieser Aufgabe wird verfahrensmäßig vorgesehen, daß in einer zweiten Phase des Umformvorganges der Ringfalz zwischen einer Umformfläche einer Matrize und der sich radial nach innen erstreckenden Fläche des Funktionselementes flachgepreßt wird.

Da bei der bekannten Ausführungsform eine Matrize nicht vorhanden ist und die Bohrung, die den beweglichen Dorn aufnimmt, einen Durchmesser aufweist, der größer ist als der maximale Durchmesser des Funktionselementes, um das Element, das auf den Dorn aufgeschraubt ist, durch die Bohrung des Werkzeuges dem Blechformteil zuzufügen, liegt die sich radial nach innen erstreckende Fläche des Funktionselementes dem Werkzeug nicht direkt gegenüber, so daß auch bei einem Zurückziehen des Dornes eine eigentliche Flachpressung des Blechformteils nicht erfolgen kann. Im übrigen bereitet das Hineinschrauben und Herausschrauben des Dornes in das jeweilige Funktionselement eine Komplikation, die auch zu einem erheblichen Zeitverlust führt, was bei großen Produktionsserien einen entscheidenden Nachteil darstellt.

Durch die erfindungsgemäße Konstruktion wird aber der Ringfalz zwischen einer Umformfläche einer Matrize und der sich radial nach innen erstreckenden, der Matrize gegenüberliegende Fläche des Funktionselementes flachgepreßt, wodurch der flachgepreßte Ringfalz ganz innig mit der sich radial nach innen erstreckenden Fläche des Funktionselementes in Berührung gebracht wird, wodurch eine besonders sichere Anbringung des Funktionselementes erreicht wird. Da das Metallteil im Bereich des Ringfalzes flachgepreßt ist, liegt auch bei der späteren Anbringung eines weiteren Bauteils mittels eines Schraubelementes (Bolzen oder Mutter) eine starre Verbindung vor, die beim Stand der Technik nicht gewährleistet ist.

Obwohl diese Konstruktion bedeutet, daß das Funktionselement nicht ohne weiteres durch eine den Stempel führende Bohrung der Matrize hindurchgeführt werden kann, kann die Matrize, die sich in einer Bohrung des Werkzeuges befindet, mit dem Stempel gemeinsam zurückgezogen werden, um die Einführung eines Mutterelementes in den Arbeitsbereich des Stempels zu ermöglichen.

Darüber hinaus ist es erfindungsgemäß nicht erforderlich, den Stempel in ein Mutterelement hineinzuschrauben, sondern es reicht vollständig aus, wenn bei Anwendung eines hohlen Funktionselementes der Stempel einen zylinderförmigen Zapfen aufweist, der in das hohle Funktionselement mindestens teilweise hineinragt.

Besonders günstig bei der vorliegenden Erfindung ist es, wenn die sich radial nach innen erstreckende Fläche des Funktionselementes in einen in axialer Richtung des Funktionselementes gerichteten Zylinderabschnitt übergeht und wenn bei der Flachpressung des Ringfalzes der Zylinderabschnitt durch Formmerkmale der Matrize radial nach außen umgeformt wird, so daß mindestens ein Teil des Ringfalaes zwischen der sich radial nach innen erstreckenden Fläche des Funktionselementes und dem umgeformten Zylinderabschnitt liegt und dort festgehalten wird.

Hierdurch wird nicht nur eine noch festere Anbringung des Funktionselementes am Metallteil geschaffen, sondern auch sichergestellt, daß Foraimerkmale, die eine Verdrehsicherung zwischen dem Funktionselement und dem Metallteil bilden und sich im Bereich der radial nach innen erstreckenden Fläche des Funktionselementes und/oder im Bereich des Zylinderabschnittes befinden, bei der Umformung des Metallteils zur Bildung des flachgepreßten Ringfalzes vollständig zur Wirkung kommen und ein inniges Ineinandergreifen des Metallteils und den Verdrehsicherungsformmerkmalen sicherstellen, wodurch die Verdrehsicherheit der Verbindung zwischen dem Funktionselement und dem Metallteil deutlich verbessert wird.

Es bestehen verschiedene Möglichkeiten die zweite Phase des Umformvorganges zur Flachpressung des Ringfalzes durchzuführen.

Nach einer ersten Ausführungsform wird die Abstützung des Funktionselementes von einem in der Matrize vorgesehenen Stempels derart vorgenommen, das nach der ersten Phase des Umformvorganges ein Zurückweichen des Stempels gestattet wird, wodurch die zweite Phase des Umformvorganges zwischen der den Stempel umgebenden Matrize und dem mit Fluiddruck belasteten Metallteil erfolgen kann.

Der Stempel kann beispielsweise durch eine Federkraft abgestützt werden und das Zurückweichen des Stempels durch Herabsetzung der Federkraft erreicht werden. Alternativ hierzu kann der Stempel durch eine Federkraft abgestützt werden und das Zurückweichen des Stempels durch Erhöhung des Fluiddruckes bewerkstelligt werden. Mit anderen Worten wird hier die Federkraft bei Erhöhung des Fluiddruckes überwunden und somit der Stempel gegen die Federkraft zurückgedrückt.

Für solche Vorgänge braucht man eine relativ starke Feder. Solche Federn sind jedoch in Form von hydraulischen Federn und mit Gasdruck belasteten Federn im Maschinenbau bestens bekannt und für andere Zwecke in Preßwerkzeugen eingesetzt.

Alternativ oder zusätzlich zu der druckabhängigen Bewegung des Stempels kann nach einer zweiten Ausführungsform der Erfindung die Abstützung des Funktionselementes durch die Matrize herbeigeführt werden, wobei die zweite Phase des Umformvorganges lediglich durch eine Erhöhung des auf das Metallteil einwirkenden Fluiddrucks erfolgt. Diese Ausführungsvariante läßt sich insbesondere dann bewerkstelligen, wenn das Funktionselement einen Zylinderabschnitt aufweist. Dieser Zylinderabschnitt kann zunächst auf der Stirnseite der Matrize abgestützt werden, wodurch ein ausgeprägter Abstand zwischen der sich radial nach innen erstreckenden Fläche des Funktionselementes und der Stirnseite der Matrize vorliegt, der durch die Länge des Zylinderabschnittes bestimmt wird. Auf diese Weise kann der Ringfalz in der so gebildeten Hinterschneidung sich leicht ausbilden. Mit zunehmender Druckerhöhung fängt der Zylinderabschnitt des Funktionselementes an der Umlenkfläche der Matrize an nach außen zu gleiten, so daß sich der genannte Abstand verringert und der dort vorhandene Ringfalz zunehmend flachgepreßt wird.

Um diese Variante zu realisieren, ist es im Prinzip möglich, die Matrize fest anzuordnen, es ist jedoch wahrscheinlich günstiger, um die Funktionselemente im Bereich der Umformfläche der Matrize einführen zu können, die Matrize so auszulegen, daß sie im geöffneten Zustand des Werkzeugs zurückgezogen wird, um die Einführung des jeweiligen Mutterelementes zu ermöglichen.

Eine weitere Möglichkeit, die Flachpressung des Ringfalzes erfindungsgemäß zu realisieren, besteht darin, die Matrize durch eine Kraft in Richtung des Metallteiles vorzuspannen und zur Durchführung der zweiten Phase des Umformvorganges die auf die Umformfläche der Matrize wirkende Vorspannkraft und der sich auf das Metallteil wirkenden Fluiddruck zu erhöhen.

Weiterhin besteht die Möglichkeit bei allen drei Aspekten zur Durchführung des Umformvorganges, anstatt den im Druckfluid herrschenden Druck zu erhöhen, mit einem Werkzeug zu arbeiten, das auf das an der Stirnseite anliegende Metallteil drückt und hierdurch eine mechanisch erhöhte Umformungskraft erzeugt, um die Flachpressung des Ringfalzes zwischen der sich radial nach innen erstreckenden Fläche des Funktionselementes und der Matrize zu erreichen.

Es kann sich bei dem Funktionselement entweder um ein Bolzenelement mit einem Kopfteil und einem Schaftteil oder in an sich bekannter Weise um ein Mutterelement handeln. Besonders bevorzugte Ausführungsformen des Verfahrens lassen sich den Unteransprüchen entnehmen. Besonders bevorzugte Ausführungsvarianten des erfindungsgemäßen Zusammenbauteils sind den weiteren Ansprüchen 22 bis 31 zu entnehmen.

Die vorliegende Erfindung wird nachfolgend anhand von Ausführungsbeispielen unter Bezugnahme auf die Zeichnungen näher beschrieben; es zeigen:
- Fig. 1A bis 1C: eine Reihenfolge von Zeichnungen, um die erfindungsgemäße Anbringung eines hohlen Funktionselementes an einem Metallteil mittels eines Hochdruckumformvorganges darzustellen,
- Fig. 2A bis 2C: eine Reihenfolge von Zeichnungen ähnlich den Zeichnungen der Fig. 1A bis 1C, um die Anbringung eines hohlen Elementes an einem Metallteil zu erläutern, wobei ein Butzen aus dem Metallteil herausgetrennt wird,
- Fig. 3A bis 3C: eine weitere Reihenfolge von Zeichnungen ähnlich den Zeichnungen der Fig. 1A bis 1C, bei denen jedoch der verwendete Stempel eine besondere Formgebung aufweist,
- Fig. 4A bis 4C: eine zusätzliche Reihenfolge von Zeichnungen ähnlich den Zeichnungen der Fig. 1A bis 1C, wobei jedoch das Metallteil im Bereich der einen Stirnseite des hohlen Funktionselementes gelocht und umgeformt wird,
- Fig. 5A bis 5C: eine weitere Folge von Zeichnungen ähnlich den Zeichnungen der Fig. 2A bis 2C, um eine weitere Ausführungsvariante darzustellen, und
- Fig. 6A bis 6C: eine Zeichnungsreihe ähnlich den Zeichnungen der Fig. 1A bis 1C, jedoch in modifizierter Form zur Darstellung der erfindungsgemäßen Anbringung eines Funktionselementes in Form eines Bolzenelementes an einem Metallteil.

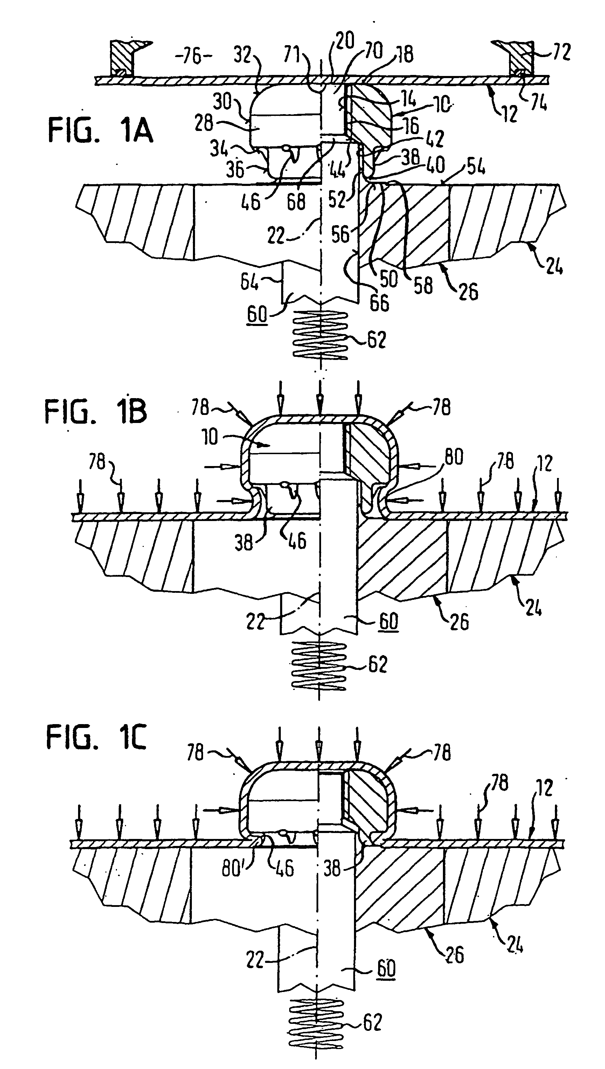

Die Fig. 1A bis 1C zeigen verschiedene Phasen bei der Anbringung eines Funktionselementes in Form eines hohlen Mutterelementes 10 an einem Metallteil in Form eines Blechformteils 12. Das hohle Funktionselement 10 weist in diesem Beispiel eine Bohrung 14 auf, die mit einem Gewindezylinder 16 versehen ist, der an einer dem Blechformteil 12 zugewandten Stirnseite 18 des Funktionselementes 10 in eine zumindest im wesentlichen kreisförmige Öffnung 20 mündet. Die mit dem Gewindezylinder 16 versehene Bohrung 14 erstreckt sich konzentrisch zur Längsrichtung 22 des Funktionselementes, das zugleich die Längsachse eines allgemein mit dem Bezugszeichen 24 gekennzeichneten Werkzeugs mit Matrize 26 darstellt. Das Funktionselement 10 hat einen Körperabschnitt 28 mit einer Mantelfläche 30 und die Stirnseite 18 des Funktionselementes 10 geht über eine gerundete Schulter 32 des Funktionselementes in die Mantelfläche 30 über. Diese geht wiederum in eine sich radial nach innen erstreckende Fläche 34 über, die in diesem Beispiel anschließend in die Außenfläche 36 eines Zylinderabschnittes 38 übergeht. Das freie, der Stirnseite 18 entgegengesetzte Stirnende 40 des Zylinderabschnittes 38 ist abgerundet und geht in einen hohlen Bereich 42 im Inneren des Zylinderabschnitts 38 über und dieser Bereich 42 führt über eine schräg gestellte Schulterfläche 44, die später als Einführhilfe für eine Schraube dient, in die mit dem Gewinde 16 versehene Bohrung.

Im Bereich des Überganges zwischen der sich radial nach innen erstreckenden Fläche 34 und der äußeren Fläche 36 des Zylinderabschnittes 38 befinden sich Verdrehsicherungsnasen 46, in dieser Ausführungsform acht an der Zahl, die erhaben an der sich radial nach innen erstreckenden Fläche 34 und der Zylinderfläche 36 des Zylinderabschnitts 38 entlang verlaufen. Die Anzahl der Verdrehsicherungsmerkmale und deren Form kann durchaus anders realisiert werden. Sie können z.B. nur an der sich radial erstreckenden Fläche 34 oder nur am Zylinderabschnitt 38 vorgesehen werden und können nicht nur als Nasen, sondern auch als Vertiefungen realisiert werden.

Das dargestellte Element weist eine starke Ähnlichkeit mit dem von der Firma Profil Verbindungstechnik GmbH & Co. KG angebotenen RSN-Element auf.

Wie bereits angedeutet, befindet sich das Funktionselement 10 oberhalb einer Matrize 26 mit einer ringförmigen Umformfläche 50, die konzentrisch zur Längsachse 22 angeordnet ist. Die Umformfläche 50 ist zwischen einem axialen Vorsprung 52 und einer mit der Oberseite des Werkzeugs 24 bündig angeordbeten Ringfläche 54 angeordnet und weist einen sanft gerundeten Übergang vom Vorsprung 52 in die senkrechte zur Längsachse 22 stehende Ringfläche 56 auf, die über eine kleine Ringschulter 58 in die stirnseitige Ringfläche 54 der Matrize 26 übergeht, wobei die Ringfläche 54 ebenfalls senkrecht zur Längsachse 22 angeordnet ist.

Innerhalb der Matrize 26 befindet sich ein Stempel 60, der über eine schematisch dargestellte Feder 62 nach oben vorgespannt ist. Es handelt sich bei der Feder 62 um eine vorzugsweise hydraulisch vorgespannte Feder, die eine starke Federkraft ausüben kann. Der Stempel 60 hat einen Zylinderbereich 64, der in die mittlere Längsbohrung 66 der Matrize 26 geführt ist und diese geht über eine schräg gestellte Ringschulter 68, deren Schräge der der Ringfläche 44 entspricht, in einen zylindrischen Zapfen bzw. Vorsprung 70 über, der innerhalb der Gewindebohrung 14 angeordnet ist und einen Außendurchmesser aufweist, der geringfügig kleiner als der Innendurchmesser der Gewindebohrung 14 ist. Die Stirnseite 71 des Zapfens 70 liegt in diesem Beispiel bündig mit der Stirnseite 18 des Funktionselementes 10.

Oberhalb des Blechformteils 12 befindet sich in dieser Ausführungsform ein Niederhalter 72, der von oben vorgespannt gegen das Blechformteil 12 gedrückt wird und diesem gegenüber über eine Dichtung 74 abgedichtet sein kann. Der Niederhalter 72 definiert einen Hohlraum 76, der mit einem Druckfluid wie beispielsweise eine Druckflüssigkeit gefüllt ist.

Zunächst wird der Niederhalter nach unten gedrückt und der Druck im Raum 76 erhöht, so daß das Blechformteil 12 sich um das Funktionselement 10 unter dem aufgebrachten Druck umformt und in einer ersten Phase des Umformvorganges die Gestalt gemäß Fig. 1B annimmt. Aus Fig. 1B sieht man, daß das Blechformteil durch den aufgebrachten Fluiddruck
- durch die Pfeile 78 schematisch angedeutet - an der Stirnseite 18 des Funktionselementes 10 angedrückt, um die gerundete .Ringschulter 32 und die Mantelfläche 30 gelegt und im Bereich zwischen der sich radial nach innen erstreckenden Fläche 34 des Funktionselementes 10 und der Stirnseite der Matrize 26 zu einem radial nach innen gerichteten Ringfalz 80 gebildet wird, der sich in die zwischen der Fläche 34 und der Stirnseite der Matrize gebildeten Hinterschneidung hineinerstreckt.

Während dieser ersten Phase des Umformvorganges verhindert der Stempel 60, daß das Funktionselement 10 sich in axialer Richtung der Längsachse 22 bewegt, d.h. in diesem Beispiel wird das Mutterelement 10 vom Stempel 60 an der Ringfläche 44 abgestützt. Stattdessen kann das Funktionselement 10 über den zylindrischen Abschnitt 38 an der Umformfläche 50 der Matrize 26 abgestützt werden. Als weitere Alternative kann das Funktionselement sowohl vom Stempel 60 als auch von der Matrize 26 abgestützt werden.

Es wird nunmehr entweder der Druck der hydraulisch vorgespannten Feder 62 herabgesetzt oder der Fluiddruck (Pfeile 78) erhöht, oder beide Maßnahmen werden gleichzeitig durchgeführt, so daß die Gesamtkraft, die auf dem Funktionselement 10 in axialer Richtung arbeitet, ausreicht, um einerseits den Ringfalz 80 flachzupressen (zu der Form, die bei 80' in Fig. 1C gezeigt wird), und gleichzeitig den Zylinderabschnitt 38 in der radialen Richtung umzuformen, damit diese die Position und Gestalt gemäß Fig. 1C annimmt. Diese Verfonnung des Zylinderabschnittes 38 wird durch die gerundete Umformfläche 50 der Matrize unter Einwirkung der herrschenden Axialkräfte durchgeführt.

Man sieht aus der Fig. 1C, daß die Verdrehsicherungsnasen 46 in das Blechmaterial des Ringfalzes hineingedrückt sind. Dies ist ganz deutlich bei der Verdrehsicherungsnase 46 auf der linken Seite der Fig. 1C zu sehen. Somit wird in diesem Bereich eine starke Verdrehsicherung erreicht, die auch nicht locker werden kann, da das in radialer Richtung umgelegte freie Ende des Zylinderabschnittes 38 das Material des Metallteils in diesem Bereich festklemmt.

Das Werkzeug kann nunmehr geöffnet werden und das Zusammenbauteil bestehend aus dem Metallformteil und dem Funktionselement entweder vom Zapfen des Stempels abgehoben oder dieser kann nach unten weggezogen werden, um das Zusammenbauteil freizugeben. Besonders günstig ist es, wenn die Matrize 26 mit dem Stempel 60 nach unten weggezogen werden, da man dann ein neues Funktionselement 10 über einen entsprechenden Zuführkanal (nicht gezeigt) im Bereich des Stempels wieder einführen kann.

Als Alternative zu der Druckerhöhung oder zu der Federkraftherabsetzung, die zu der zweiten Phase des Umformvorganges führt, d.h. zu der Zustandsänderung vom Zustand gemäß Fig. 1B in den Zustand gemäß Fig. 1C, wäre es auch denkbar, eine erhöhte mechanische Kraft auf die Stirnseite des Funktionselementes auszuüben; dies kann dadurch erfolgen, daß ein Teil des Werkzeuges 72 auf die in Fig. 1C gezeigte Oberseite des Metallteils.drückt und über das Metallteil das Funktionselement 10 nach unten drückt.

Um das Zusammenbauteil aus dem Werkzeug gemäß Fig. 1C entfernen zu können, können in an sich bekannter Weise Stifte im Werkzeug 24 betätigt werden, um das Zusammenbauteil nach oben in eine Freigabeposition oberhalb der Stirnseite 72 des Stempels 60 anzuheben, damit es aus dem Bereich des Werkzeuges entfernt werden kann. Das Werkzeug kann anschließend mit einem neuen Blechformteil 12 bestückt werden.

Bei dem Metallteil 12 kann es sich auch um eine hohle Struktur handeln, beispielsweise in Form eines Rohrs, wobei der Fluiddruck im hohlen Inneren des Rohres aufgebaut wird. Bei einer solchen Konstruktion ist es erforderlich, ein oberes Werkzeug vorzusehen, das das Rohr auf dessen Oberseite stabil abstützt und nach unten drückt, damit der Umformvorgang durchgeführt werden kann.

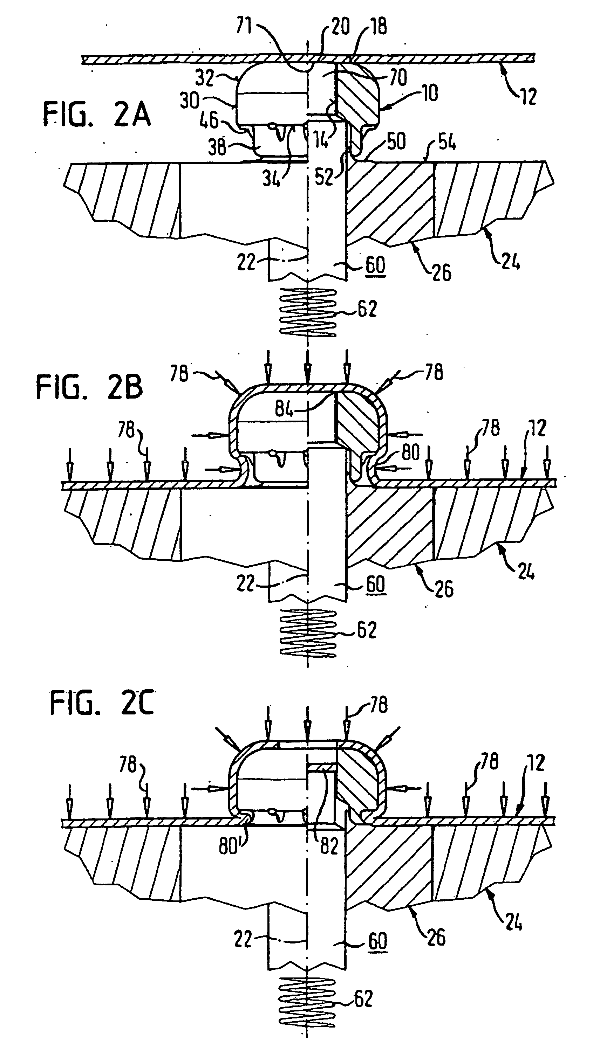

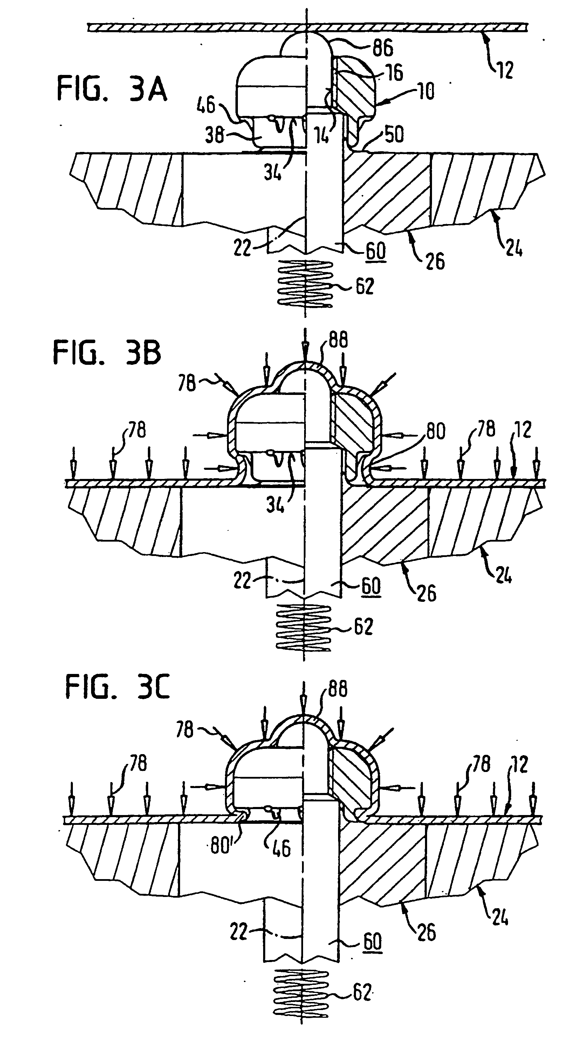

Die Fig. 2A bis 2C zeigen nunmehr eine leicht abgewandelte Ausführungsform der Ausführung gemäß Fig. 1A bis 1C und es werden in diesen Figuren wie auch in allen nachfolgenden Figuren die gleichen Bezugszeichen verwendet wie auch in Fig. 1A bis 1C. Es versteht sich, daß Teile, die mit den gleichen Bezugszeichen identifiziert sind, die gleiche Auslegung und die gleiche Funktion aufweisen wie die bereits beschriebenen Teile in Fig. 1A bis 1C, so daß auf eine erneute Beschreibung dieser Teile bzw. deren Funktionen verzichtet werden kann. Stattdessen werden lediglich die wesentlichen Unterschiede bei der Ausführung gemäß Fig. 2A bis 2C und bei den weiteren Ausführungsformen nach den Figuren 3A bis 3C, 4A bis 4C, 5A bis 5C und 6A bis 6C beschrieben.

Wesentlich bei der Ausführungsform gemäß Fig. 2A bis C ist, daß das Metallteil im Bereich der stirnseitigen Öffnung des hohlen Funktionselementes 10 gelocht wird und hierdurch einen Butzen 82 erzeugt. Zu diesem Zweck ist die hohle Bohrung 14 des Funktionselementes 10 der Zeichnungen Fig. 2A bis 2C nicht mehr als Gewindebohrung ausgebildet, sondern als Zylinderbohrung, die im Bereich der Stirnseite 18 des Funktionselementes 10 in eine scharfe Ringkante 84 übergeht. In der zweiten Phase des Umformvorgangs, beim Zurückweichen des Stempels, reicht der auf das Blechteil ausgeübte Druck aus, um den Butzen 90 herauszutrennen.

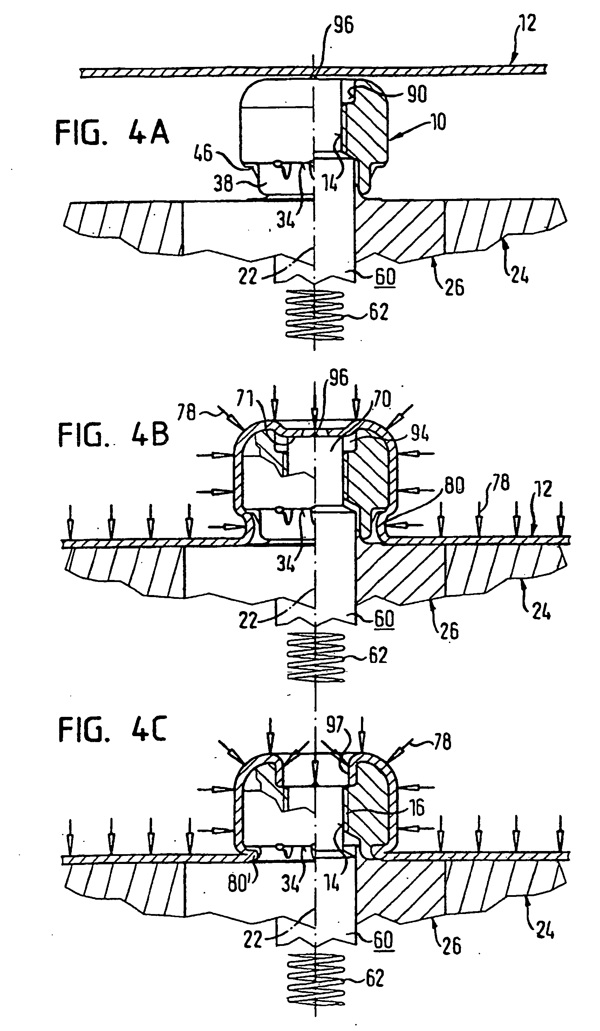

Das Funktionselement 10 kann anschließend mit einer gewindeformenden oder gewindeschneidenden Schraube benutzt werden oder es kann nachträglich ein Gewinde in die Bohrung 14 eingeschnitten werden, oder der Gewindezylinder kann in eine abgesetzte Bohrung übergehen, wie beispielsweise nachfolgend im Zusammenhang mit den Fig. 4A bis 4C beschrieben wird.

Denkbar wäre es auch, daß das Funktionselement 10 lediglich mit einer hohlen Bohrung versehen wird, die dann beispielsweise als Lagerbohrung für eine drehbare Welle genutzt werden könnte oder durch eine besondere Formgebung für die Zusammenarbeit mit einem Steckstift oder dergleichen ausgelegt sein könnte.

Durch die Heraustrennung des Butzens 82 ist es möglich, ein Bolzenelement in das Funktionselement hineinzuführen, und zwar so, daß sein Schaftteil aus der Stirnseite 18 des Funktionselementes heraus- und durch das Metallteil 12 hindurchragt.

Bei der Ausführungsform gemäß Fig. 3A bis 3C wird der Stempel 60 mit einem domförmigen vorzugsweise halbsphärischen Stirnende 86 ausgestattet, das bereits während der ersten Phase des Umformforgangs eine entsprechende halbsphärische Vertiefung im Metallteil 12 ausbildet. Nach Herausnahme des fertigen Zusammenbauteils (wie es Fig. 3C zeigt) aus dem Werkzeug 24 dient die halbsphärische Vertiefung im Metallteil 12 zur Aufnahme der Spitze eines in das Funktionselement 10 eingeschraubten Bolzens.

Bei der Auführungsform gemäß Fig. 4A bis C geht die Bohrung 14 des Funktionselementes 10 in eine abgesetzte Bohrung 90 über und der Stempel 60 weist an der Stirnseite 71 des Zapfens 70 in der Mitte und mit der Längsachse 22 ausgerichtet eine Spitze 92 auf. In der ersten Phase des Umformvorganges wird das Metallteil 12 gegen die Spitze 96 gedrückt, so daß die Spitze in das Metallteil hineindringt und diese schwächt, und zwar so weit, daß der auf das Metallteil im Bereich der Stirnseite des Mutterelementes 10 ausgeübte Druck ausreicht, um das Blechmaterial dort zu einem Loch zu verformen und anschließend den Randbereich des Loches in die abgesetzte Bohrung 90 hineinzuformen, bis das Metallteil schließlich die Position und Gestalt gemäß Fig. 4C annimmt. Man merkt aus der Fig. 4C, daß der Innendurchmesser des umgeformten Blechteils in der abgesetzten Bohrung 90 gerade noch größer ist als der Grunddurchmesser des Gewindezylinders 16, so daß ein in das Funktionselement 10 eingeführter Bolzen aus der Stirnseite 18 des Funktionselementes hinausragen kann, ohne dabei das Blechmaterial zu berühren.

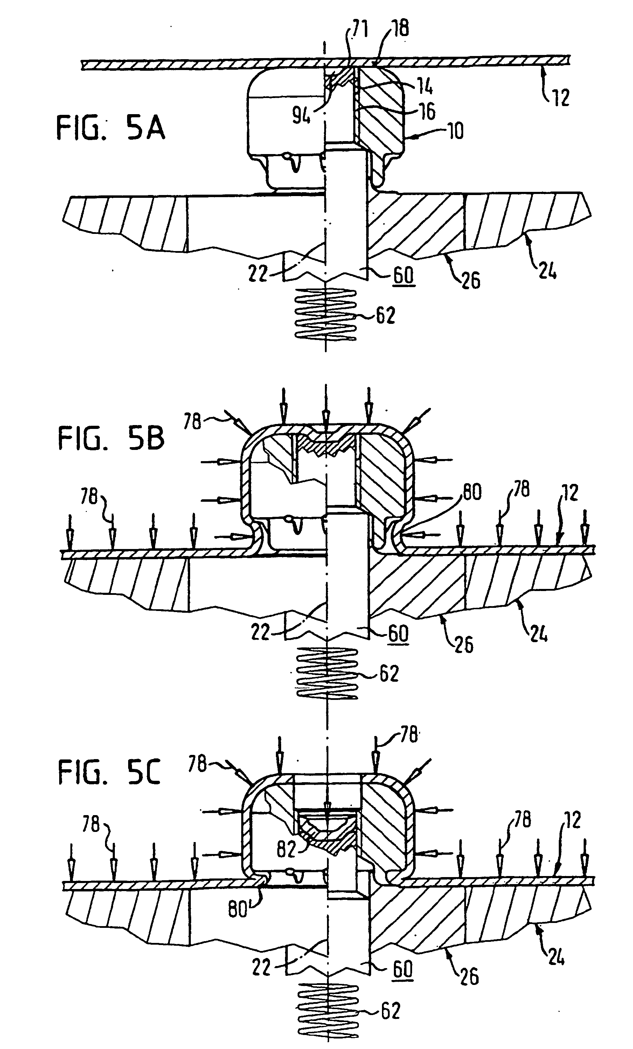

Die Fig. 5A bis 5C zeigt eine weitere Möglichkeit, einen Butzen 82 aus dem Metallteil 12 herauszutrennen, und zwar unter Anwendung eines Stempels 60 mit einem Stirnende 71 mit einer mittleren Vertiefung 94, die konzentrisch zur Längsachse 22 ist. Während der ersten Phase des Umformvorgangs wird das Blechmaterial in die Vertiefung 94 hineingedrückt und anschließend an der scharfen Kante im Bereich des Überganges der abgesetzten Bohrung 14 in die Stirnseite 18 des Funktionselements (wo das Gewinde 16 nicht vorliegt) durchschnitten. Die bereits erwähnte Form des Butzens 82 sorgt dafür, daß dieser durch den Gewindezylinder 16 hindurchgedrückt werden kann, ohne daß der Gewindezylinder in unzulässiger Weise beschädigt wird, da die vertiefte Form des Butzens 82 eine radial nach innen federnde Wirkung seines äußeren Bereichs zuläßt und auf diese Weise einerseits eine schräge Führungsfläche im Bereich des Gewindezylinders 16 bildet und andererseits die hier herrschenden Druckkräfte deutlich herabsetzt.

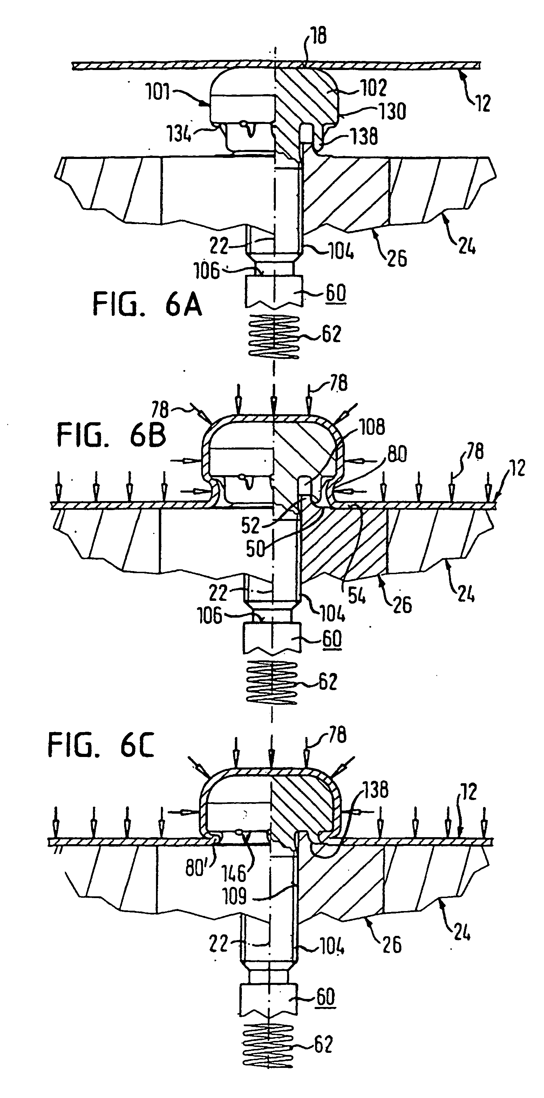

Schließlich zeigt die Ausführungsform gemäß Fig. 6A bis 6C eine Ausführungsform mit einem Funktionselement in Form eines Bolzenelements 101 mit einem Kopfteil 102 und einem mit einem Gewinde versehenen Schaftteil 104. Bei den Fig. 6A bis 6C werden gewisse Formmerkmale des Bolzenelements mit den gleichen Bezugszeichen gekennzeichnet wie in den bisherigen Figuren, um die Gemeinsamkeiten mit den vorher beschriebenen Mutterelementen zu verdeutlichen, jedoch erhöht durch die Grundzahl 100 um eine Unterscheidung in den Ansprüchen zu gestatten. Der wesentliche Unterschied zwischen dieser Ausführungsform und den bisher beschriebenen Ausführungsformen liegt darin, daß der Stempel 60 das Schaftteil 104 an dessen freiem Stirnende 106 abstützt und somit deutlich unterhalb der Stirnseite 54 der Matrize 26 angeordnet ist.

In dieser Ausführungsform bildet der Zylinderabschnitt 138 des Kopfteils 102 des Funktionselementes 10 einen zylinderförmigen Raum 108 um das Schaftteil 104 des Bolzenelementes herum, das zur Aufnahme des axial vorstehenden ringförmigen Vorsprunges 52 der Matrize 26 dient.

Das Schaftteil 104 des Funktionselements 101 ist in einer mittig angeordneten Längsbohrung 109 der Matrize 26 geführt

## Patentansprüche

1. Verfahren zum Anbringen eines Funktionselements (10; 101) an ein verformbares Metallteil (12) unter Anwendung eines Hochdruckumformverfahrens, bei dem das Metallteil (12) auf der dem abgestützten Funktionselement (10; 101) abgewandten Seite mit einem Fluiddruck belastet und in einem Umformvorgang ausgehend von einer Stirnseite (18) des Funktionselements (10; 101) um mindestens einen Abschnitt (28; 102) des Funktionselementes herum und im Bereich einer sich radial nach innen erstreckenden Fläche (34; 134) des Funktionselementes, die der am Metallteil anliegenden Stirnseite des Funktionselementes abgewandt ist, zu einer ringförmigen radial nach innen gerichteten Ringfalz (80) umgeformt wird, wobei das Funktionselement (10; 101) während dieses Umformvorganges abgestützt wird,
**dadurch gekennzeichnet,**
**daß** in einer zweiten Phase des Umformvorganges der Ringfalz (80) zwischen einer. Umformfläche (50) einer.Matrize und der sich radial nach innen erstreckenden Fläche (34; 134) des Funktionselementes (10; 101) flachgepreßt wird.

2. Verfahren nach Anspruch 1,
**dadurch gekennzeichnet,**
**daß** die sich radial nach innen erstreckende Fläche (34; 134) des Funktionselementes (10; 101) in einen sich in axiale Richtung des Funktionselementes gerichteten Zylinderabschnitt (38; 138) übergeht und daß bei der Flachpressung des Ringfalzes (80) der Zylinderabschnitt durch die Formgebung der Matrize (26) radial nach außen umgeformt wird, so daß mindestens ein Teil des Ringfalzes (80') zwischen der sich radial nach innen erstreckenden Fläche (34; 134) des Funktionselementes (10; 101) und dem umgeformten Zylinderabschnitt (38; 138) liegt.

3. Verfahren nach Anspruch 1 oder 2,
**dadurch gekennzeichnet,**
**daß** Formmerkmale (46), die eine Verdrehsicherung zwischen dem Funktionselement (10; 101) und dem Metallteil (12) bilden sich im Bereich der radial nach innen erstreckenden Fläche (34; 134) des Funktionselementes (10; 101) und/oder im Bereich des Zylinderabschnittes (38; 138) befinden, und daß bei der Umformung des Metallteils (12) zur Bildung des Ringfalzes (80) bzw. bei der Flachpressung des Ringfalzes ein Ineinandergreifen des Metallteils und der Verdrehsicherungsformmerkmale erzeugt wird.

4. Verfahren nach Anspruch 1,
**dadurch gekennzeichnet,**
**daß** die Abstützung des Funktionselementes (10; 101) von einem in der Matrize vorgesehenen Stempel (60) vorgenommen wird und daß nach der ersten Phase des Umformvorganges ein Zurückweichen des Stempels gestattet wird, wodurch die zweite Phase des Umformvorganges zwischen der den Stempel umgebenden Matrize (26) und dem mit Fluiddruck belasteten Metallteil (12) erfolgt.

5. Verfahren nach Anspruch 4,
**dadurch gekennzeichnet,**
**daß** der Stempel (60) durch eine Federkraft (62) abgestützt wird und daß das Zurückweichen des Stempels durch Herabsetzung der Federkraft erfolgt.

6. Verfahren nach Anspruch 4,
**dadurch gekennzeichnet,**
**daß** der Stempel (60) durch eine Federkraft abgestützt wird und daß das Zurückweichen des Stempels durch die Erhöhung des auf das Metallteil (12) wirkenden Fluiddrucks bewerkstelligt wird.

7. Verfahren nach einem der vorhergehenden Ansprüche 1 bis 4,
**dadurch gekennzeichnet,**
**daß** die Abstützung des Funktionselementes (10; 101) durch die Matrize (26) herbeigeführt wird, und daß die zweite Phase des Umformvorganges durch die Erhöhung des auf das Metallteil (12) wirkenden Fluiddrucks erfolgt.

8. Verfahren nach einem der vorhergehenden Ansprüche 1 bis 4,
**dadurch gekennzeichnet**,
däß die Matrize (26) mit der Umformfläche (50) durch eine Kraft in Richtung auf das Metallteil zu vorgespannt wird und daß zur Durchführung der zweiten Phase des Umformvorganges die auf die Umformfläche (50) der Matrize wirkende Vorspannkraft und der auf das Metallteil (12) wirkende Fluiddruck erhöht werden.

9. Verfahren nach einem der vorhergehenden Ansprüche,
**dadurch gekennzeichnet,**
**daß** zur Durchführung der zweiten Phase des Umformvorganges ein Werkzeug verwendet wird, das auf das an der Stirnseite des Funktionselements (10; 101) anliegende Metallteil (12) gedrückt wird, um eine mechanisch erhöhte Umformkraft zu erzeugen.

10. Verfahren nach einem der vorhergehenden Ansprüche,
**dadurch gekennzeichnet,**
**daß** es sich bei dem Funktionselement (101) um ein Bolzenelement mit einem Kopfteil (102) und einem Schaftteil (104) handelt, daß in der ersten Phase des Umformvorganges das Metallteil (12) um das Kopfteil (102) des Bolzenelements herum geformt wird und daß das Schaftteil (104) des Funktionselementes (101) in eine Bohrung (109) der Matrize (26) in axialer Richtung (22) beweglich geführt wird, wobei die Bohrung konzentrisch zur Umformfläche (50) der Matrize angeordnet ist.

11. Verfahren nach Anspruch 11,
**dadurch gekennzeichnet,**
**daß** das Funktionselement (101) am freien Stirnende (106) des Schaftteiles (104) abgestützt wird.

12. Verfahren nach einem der Ansprüche 1 bis 10,
**dadurch gekennzeichnet,**
**daß** es sich bei dem Funktionselement (10) um ein hohles Element mit einer Längsbohrung (14), wie beispielsweise ein Mutterelement handelt und daß ein Abstützelement (60), beispielsweise ein Stempel vorgesehen wird, welches sich von der Matrizenseite durch das hohle Element (10) bis zu dessen am Metallteil (12) anliegenden Stirnseite (18) erstreckt und das Metallteil wenigstens bei der ersten Phase des Umformvorganges dort abstützt.

13. Verfahren nach Anspruch 12,
**dadurch gekennzeichnet,**
**daß** in der zweiten Phase des Umformvorganges der Stempel (60) zurückgezogen wird, wodurch das Metallteil (12) an der Stirnseite (18) des hohlen Elementes (10) im Bereich der Längsbohrung (14) zur Bildung eines herausnehmbaren Butzens (82) unter der Wirkung des auf das Metallteil einwirkenden Fluiddrucks durchtrennt wird.

14. Verfahren nach Anspruch 13,
**dadurch gekennzeichnet,**
**daß** die Längsbohrung (14) des hohlen Elementes als eine abgestufte Bohrung (14, 90) ausgebildet ist, mit einem Abschnitt (90) größeren Durchmessers benachbart zur Stirnseite (18) des hohlen Elementes (10), wobei das Material des Metallteils (12) während des Umformvorganges in die abgesetzte Bohrung (14; 90) im Bereich des größeren Durchmessers hineingeformt wird und dort einen Kragen (97) bildet, der einen Innendurchmesser aufweist, welcher die Durchführung des Schafteiles eines Bolzens gestattet, der durch die Längsbohrung (14, 90) hindurchgeführt wird.

15. Verfahren nach Anspruch 14,
**dadurch gekennzeichnet,**
**daß** die freie Stirnseite (71) des Stempels (60) mit einer Spitze (96) ausgeführt wird, um das Metall des Metallteils (12) während des Umformvorganges zu schwächen und die Umformung in die abgestufte Bohrung (14, 90) zu ermöglichen.

16. Verfahren nach einem der vorhergehenden Ansprüche,
**dadurch gekennzeichnet,**
**daß** die dem Metallteil (12) zugewandte Stirnseite (71) des Stempels (60) mit einer Vertiefung (94) versehen wird, um bei Heraustrennung eines Butzens (82) diesen in die Vertiefung (94) des Stempels (60) durch den Fluiddruck einformen zu lassen, wodurch eine Durchmesserverkleinerung des Butzens (82) erfolgt und dieser leichter aus dem Werkzeug (24) herausgeführt werden kann.

17. Verfahren nach einem der vorhergehenden Ansprüche 1 bis 12,
**dadurch gekennzeichnet,**
**daß** der Stempel (60) an seinem freien Stirnende (71) eine konvexe Gestaltung (86) aufweist, beispielsweise eine halbsphärische Rundung, die während des Umformvorganges über die Stirnseite (18) des Funktionselementes (10) hinausragt und zu einer entsprechenden Formgebung (88) des Metallteils (12) führt, wodurch im Anschluß an die Längsbohrung (14) des Funktionselementes im Metallteil (12) eine Aufnahme (88) für die Spitze eines Bolzenelementes vorliegt.

18. Verfahren nach einem der vorhergehenden Ansprüche,
**dadurch gekennzeichnet,**
**daß** das Funktionselement (10; 101) an seiner dem Metallteil (12) zugewandten Stirnseite (18) mit einem stark gerundeten Übergang (32) von der Stirnseite (18; 118) in seiner Mantelfläche (30; 130) versehen ist, um die das Metallteil umgelegt wird, ohne es durchzuschneiden.

19. Verfahren nach einem der vorhergehenden Ansprüche,
**dadurch gekennzeichnet,**
**daß** es sich bei dem Metallteil um eine hohle Struktur handelt, die auf der Innenseite mit Fluiddruck beaufschlagt wird und auf der einen Außenseite in eine passende Aufnahme eines Werkzeuges und auf der entgegengesetzten Außenseite von der Matrize bzw. von einem dieser umgebenden. Werkzeug abgestützt wird.

20. Verfahren nach einem der vorhergehenden Ansprüche 1 bis 18,
**dadurch gekennzeichnet,**
**daß** es sich bei dem Metallteil (12) um ein Blechteil handelt, daß mit einem Werkzeug (72) auf die dem Funktionselement abgewandten Seite des Blechteils gedrückt wird und daß in diesem Werkzeug ein Hohlraum (76) vorgesehen ist, der mit Druck beaufschlagt wird, um den Umformvorgang durchzuführen.

21. Verfahren nach Anspruch 20,
**dadurch gekennzeichnet,**
**daß** das Werkzeug (72) das Blechteil (12) gegen die Stirnseite der Matrize (26) bzw. gegen ein die Matrize (26) umgebendes Werkzeug (24) drückt und somit eine Niederhaltefunktion ausübt.

22. Ein Zusammenbauteil, bestehend aus einem, an ein verformbares Metallteil (12) angebrachtes Funktionselement (10; 101), bei dem das Metallteil (12) an einer Stirnseite (18; 118) des Funktionselementes (10; 101) anliegt, um einen Abschnitt des Funktionselementes (30; 102) benachbart zur Stirnseite (18) entlang geführt und an einer sich radial nach innen erstreckenden Fläche (34; 134) des Funktionselementes, die der am Metallteil (12) anliegenden Stirnseite (18; 118) des Funktionselementes abgewandt ist, in einen ringförmigen, radial nach innen gerichteten Ringfalz (80') übergeht,
**dadurch gekennzeichnet,**
**daß** der Ringfalz (80') im Bereich der sich radial nach innen erstreckenden Fläche (149; 134) des Funktionselementes (10; 101) flachgepreßt ist.

23. Zusammenbauteil nach Anspruch 22,
**dadurch gekennzeichnet,**
**daß** der flachgepreßte Ringfalz (80') zwischen der sich radial nach innen erstreckenden Fläche (34; 134) des Funktionselementes (10; 101) und einer sich radial nach außen erstreckenden Fläche eines umgeformten Zylinderabschnittes (38; 138) des Funktionselementes angeordnet ist.

24. Zusammenbauteil nach Anspruch 22 oder 23,
**dadurch gekennzeichnet,**
**daß** Formmerkmale (46; 146), die eine Verdrehsicherung zwischen dem Funktionselement (10; 101) und dem Metallteil (12) bilden, sich im Bereich der sich radial nach innen erstreckenden Fläche (34; 138) des Funktionselementes und/oder im Bereich des Zylinderabschnittes (38; 138) befinden, wobei die Formmerkmale (46; 146) und das Metallteil (12) im Bereich des flachgepreßten Ringfalzes (80') ineinander greifen.

25. Zusammenbauteil nach einem der Ansprüche 22 bis 24,
**dadurch gekennzeichnet,**
**daß** die Mantelfläche (30; 130) des vom Metallteil (12) umgebenen Abschnittes (28; 102) des Funktionselementes (10; 101) mit Vertiefungen oder Erhebungen ausgestattet ist, die vorzugsweise gerundet sind, um eine Verdrehsicherung zwischen dem Funktionselement und dem Metallteil sicherzustellen.

26. Zusammenbauteil nach einem der vorhergehenden Ansprüche 22 bis 25,
**dadurch gekennzeichnet,**
**daß** es sich bei dem Funktionselement um ein Bolzenelement (101) mit einem den genannten Abschnitt bildenden Kopfteil (102) und einem Schaftteil (104) handelt.

27. Zusammenbauteil nach einem der Ansprüche 22 bis 25,
**dadurch gekennzeichnet,**
**daß** es sich bei dem Funktionselement um ein hohles Element (10), wie beispielsweise ein Mutterelement handelt.

28. Zusammenbauteil nach Anspruch 27,
**dadurch gekennzeichnet,**
**daß** im Bereich der Stirnseite (18) des hohlen Funktionselementes das Metallteil (12) eine Lochung aufweist.

29. Zusammenbauteil nach Anspruch 28,
**dadurch gekennzeichnet,**
**daß** im Bereich der Stirnseite (18) des Funktionselementes das Material des Metallteils in eine abgestufte Bohrung (90) des Funktionselementes (10) eingeformt ist.

30. Zusammenbauteil nach einem der vorhergehenden Ansprüche 22 bis 29,
**dadurch gekennzeichnet,**
**daß** Verdrehsicherungsmerkrnale sich im Bereich der Stirnseite des Funktionselementes bzw. in einer etwaigen dort vorgesehenen abgestuften Bohrung befinden.

31. Zusammenbauteil nach einem der vorhergehenden Ansprüche 23 bis 30,
**dadurch gekennzeichnet,**
**daß** der umgeformte Bereich des Zylinderabschnittes (38; 138) auf der dem Metallteil (12) abgewandten Seite sich zumindest im wesentlichen radial zur Längsachse (22) des Funktionselementes (10; 101) erstreckt, in einen entsprechenden sich radial erstreckenden Bereich des Metallteils übergeht und mit diesem in einer radialen Ebene liegt.

## Claims

1. Method for the attachment of a functional element (10; 101) to a deformable metal part (12) using a high pressure forming process in which the metal part (12) is exposed to a fluid pressure at the side remote from the supported functional element (10; 101) and is formed in a forming process starting from one end face (18) of the functional element (10; 101) around at least one portion (28; 102) of the functional element and, in the region of a radially inwardly extending surface (34; 134) of the functional element which is remote from the end face of the functional element contacting the metal part, into a ring-like radially inwardly directed ring-fold (80), with the functional element (10; 101) being supported during this forming process,
**characterized in that**,
in a second phase of the forming process, the ring-fold (80) is pressed flat between a shaping surface (50) of a die and the radially inwardly extending surface (34; 134) of the functional element (10; 101).

2. Method in accordance with claim 1,
**characterized in that**
the radially inwardly extending surface (34; 134) of the functional element (10; 101) merges into a cylinder portion (38; 138) directed in the axial direction of the functional element and **in that**, during the pressing flat of the ring-fold (80) the cylinder portion is formed radially outwardly by the shaping of the die (26) so that at least one part of the ring-fold (80') lies between the radially inwardly extending surface (34; 134) of the functional element (10; 101) and the cylinder portion (38; 138) which has been changed in shape.

3. Method in accordance with claim 1 or claim 2,
**characterized in that**
features of shape (46) which form a security against rotation between the functional element (10; 101) and the metal part (12)O are located in the region of the radially inwardly extending surface (34; 134) of the functional element (10; 101) and/or in the region of the cylinder portion (38; 138) and **in that**, during the shaping of the metal part (12) for the formation of the ring-fold (80), or during the pressing flat of the ring-fold an inter-engagement of the metal part and of the features of shape providing security against rotation is produced.

4. Method in accordance with claim 1,
**characterized in that**
the support of the functional element (10; 101) is effected by a plunger (60) provided in the die and **in that** after the first phase of the shaping process the plunger is permitted to deflect backwardly, whereby the second phase of the shaping process takes place between the die (26) surrounding the plunger and the metal part (12) exposed to fluid pressure.

5. Method in accordance with claim 4,
**characterized in that**
the plunger (60) is supported by a spring force (62) and **in that** the backward deflection of the plunger takes place by reduction of the spring force.

6. Method in accordance with claim 4,
**characterized in that**
the plunger (60) is supported by a spring force and **in that** the rearward deflection of the plunger is brought about by increasing the fluid pressure acting on the metal part (12).

7. Method in accordance with one of the preceding claims 1 to 4,
**characterized in that**
the support of the functional element (10; 101) is brought about by the die (26) and **in that** the second phase of the forming process takes place by increasing the fluid pressure acting on the metal part (12).

8. Method in accordance with one of the preceding claims 1 to 4,
**characterized in that**
the die (26) with the shaping surface (50) is biased by a force in the direction towards the metal part and **in that**, for the carrying out of the second phase of the shaping process, the bias force acting on the shaping surface (50) of the die and the fluid pressure acting on the metal part (12) are increased.

9. Method in accordance with one of the preceding claims,
**characterized in that**
in order to carry out the second phase of the shaping process a tool is used which is pressed onto the metal part (12) contacting the end face of the functional element (10; 101) in order to produce a mechanically increased shaping force.

10. Method in accordance with one of the preceding claims,
**characterized in that**
the functional element (101) is a bolt element having a head part (102) and a shaft part (104); **in that** the metal part (12) is formed around the head part of the bolt element in the first phase of the forming process and **in that** the shaft part (104) of the functional element (101) is movably guided in a bore (109) of the die (26) in the axial direction (22), with the bore being arranged concentric to the forming surface (50) of the die.

11. Method in accordance with claim 11,
**characterized in that**
the functional element is supported at the free end face (106) of the shaft part (104).

12. Method in accordance with one of the claims 1 to 10,
**characterized in that**
the functional element (10) is a hollow element having a longitudinal bore (14), such as for example a nut element and **in that** a support element (60), for example a plunger, is provided which extends from the die side through the hollow element (10) up to its end face (18) contacting the metal part (12) and **in that** the metal part is supported there at least during the first phase of the forming process.

13. Method in accordance with claim 12,
**characterized in that**
in the second phase of the forming process, the plunger (60) is retracted, whereby the metal part (12) is cut through in the region of the longitudinal bore (14) to form a removable slug (82) under the action of the fluid pressure acting on the metal part.

14. Method in accordance with claim 13,
**characterized in that**
the longitudinal bore (14) of the hollow element is formed as a stepped bore (14, 90) having a section (90) of larger diameter adjacent to the end face (18) of the hollow element (10), with the material of the metal part (12) being formed during the forming process into the stepped bore (14; 90) in the region of the larger diameter and forms a collar (97) there having an inner diameter which permits the passage of the shaft part of a bolt which is passed through the longitudinal bore (14, 90).

15. Method in accordance with claim 14,
**characterized in that**
the free end face (71) of the plunger (60) is executed with a tip (96) in order to weaken the metal of the metal part (12) during the forming process and to enable the forming into the stepped bore (14, 90).

16. Method in accordance with one of the preceding claims,
**characterized in that**
the end face (71) of the plunger (60) confronting the metal part (12) is provided with a recess (94) in order, on the cutting out of a slug (82), to permit this to be formed into the recess (94) of the plunger (60) by the fluid pressure, whereby a reduction in diameter of the slug (82) takes place and this can be more easily led out of the tool (24).

17. Method in accordance with one of the preceding claims 1 to 12,
**characterized in that**
the plunger (60) has a convex shape (86) at its free end face (71), for example a hemispherical rounded shape, which projects during the forming process beyond the end face (18) of the functional element (10) and leads to a corresponding shaping (88) of the metal part (12), whereby a receiver (8) for the tip of a bolt element is present.

18. Method in accordance with one of the preceding claims,
**characterized in that**
the functional element (10; 101) is provided at its end face (18) confronting the metal part (12) with a pronouncedly rounded transition (32) from the end face (18; 118) into its side surface (30; 130) around which the metal part is laid without it being cut through.

19. Method in accordance with one of the preceding claims,
**characterized in that**
the metal part is a hollow structure which is acted on at the inner side with fluid pressure and is supported at the one outer side in a matching recess of a tool and is supported at the opposite outer side by the die or by a tool surrounding the die.

20. Method in accordance with one of the preceding claims 1 to 18,
**characterized in that**
the metal part (12) is a sheet metal part which is pressed by a tool (72) onto the side of the sheet metal part remote from the functional element and **in that** a hollow space (76) is provided in this tool which is exposed to pressure in order to carry out the forming process.

21. Method in accordance with claim 20,
**characterized in that**
the tool (72) presses the sheet metal part (12) against the end face of the die (26), or against a tool (24) surrounding the die (26), and thus exerts a hold-down function.

22. A component assembly comprising a functional element (10; 101) attached to a deformable metal part (12) in which the metal part (12) contacts one end face (18; 118) of the functional element (10; 101), is guided along a portion of the functional element (30; 102) adjacent to the end face (18) and merges at a radially inwardly extending surface (34; 134) of the functional element, which is remote from the end face (18; 118) of the functional element contacting the metal part (12), into a ring-like radially inwardly directed ring-fold (80')
**characterized in that**
the ring-fold (80') is pressed flat in the region of the radially inwardly extending surface (149; 134) of the functional element (10; 101).

23. Component assembly in accordance with claim 22,
**characterized in that**
the ring-fold (80') which is pressed flat is arranged between the radially inwardly extending surface (34; 134) of the functional element (10; 101) and a radially outwardly extending surface of a cylinder portion (38; 138) of the functional element which has been changed in shape.

24. Component assembly in accordance with claim 22 or 23,
**characterized in that**
features of shape (46; 146) which form a security against rotation between the functional element (10; 101) and the metal part (12) are located in the region of the radially inwardly extending surface (34; 138) of the functional element and/or in the region of the cylinder portion (38; 138), with the features of shape (46; 146) and the metal part (12) inter-engaging in the region of the pressed flat ring-fold (80').

25. Component assembly in accordance with one of the claims 22 to 24,
**characterized in that**
the jacket surface (30; 130) of the section (28; 102) of the functional element (10; 101) surrounded by the metal part (12) is equipped with recesses or elevations which are preferably rounded in order to ensure a security against rotation between the functional element and the metal part.

26. Component assembly in accordance with one of the preceding claims 22 to 25,
**characterized in that**
the functional element is a bolt element (101) having a head part (102) forming the named portion and a shaft part (104).

27. Component assembly in accordance with one of the claims 22 to 25,
**characterized in that**
the functional element is a hollow element (10), such as for example a nut element.

28. Component assembly in accordance with claim 27,
**characterized in that**
the metal part (12) has an aperture in the region of the end face (18) of the hollow functional element.

29. Component assembly in accordance with claim 28,
**characterized in that**
the material of the metal part is formed in the region of the end face (18) of the functional element into a stepped bore (90) of the functional element (10).

30. Component assembly in accordance with one of the preceding claims 22 to 29,
**characterized in that**
features providing security against rotation are located in the region of the end face of the functional element or in any stepped bore provided there.

31. Component assembly in accordance with one of the preceding claims 22 to 30,
**characterized in that**
the region of the cylinder portion (38; 138) which has been changed in shape extends, at the side remote from the metal part (12), at least substantially radially to the longitudinal axis (22) of the functional element (10; 101), merges into a corresponding radially extending region of the metal part and lies in a radial plane with the latter.

## Revendications

1. Procédé de montage d'un élément fonctionnel (10 ; 101) sur une pièce métallique déformable (12) en appliquant un procédé de mise en forme sous haute pression, dans lequel la pièce métallique (12) est chargée par un fluide sous pression sur le côté détourné de l'élément fonctionnel soutenu (10 ; 101) et est déformée en une feuillure annulaire (80) dirigée radialement vers l'intérieur par une opération de mise en forme à partir une face frontale (18) de l'élément fonctionnel (10 ; 101) autour d'au moins un tronçon (28 ; 102) de l'élément fonctionnel et dans la zone d'une surface (34 ; 134) de l'élément fonctionnel, laquelle s'étend radialement vers l'intérieur et qui est détournée de la face frontale de l'élément fonctionnel prenant appui contre la pièce métallique, l'élément fonctionnel (10 ; 101) étant soutenu pendant cette opération de mise en forme,
**caractérisé en ce que**
dans une seconde phase de l'opération de mise en forme, la feuillure annulaire (80) est pressée à plat entre une surface de mise en forme (50) d'une matrice et la surface (34 ; 134) de l'élément fonctionnel (10 ; 101), laquelle s'étend radialement vers l'intérieur.

2. Procédé selon la revendication 1, **caractérisé en ce que** la surface (34 ; 134), s'étendant radialement vers l'intérieur, de l'élément fonctionnel (10 ; 101) se transforme en un tronçon cylindrique (38 ; 138) dirigé en direction axiale de l'élément fonctionnel, et **en ce que** lors du pressage à plat de la feuillure annulaire (80), le tronçon cylindrique est mis en forme radialement vers l'extérieur par la configuration de la matrice (26), de sorte qu'une partie au moins de la feuillure annulaire (80') se trouve entre la surface (34 ; 134), s'étendant radialement vers l'intérieur, de l'élément fonctionnel (10 ; 101) et le tronçon cylindrique (38 ; 138) mis en forme.

3. Procédé selon l'une ou l'autre des revendications 1 et 2, **caractérisé en ce que** des caractéristiques de forme (46) qui forment un blocage anti-rotation entre l'élément fonctionnel (10 ; 101) et la pièce métallique (12) se trouvent dans sa zone de la surface (34 ; 134), s'étendant radialement vers l'intérieur, de l'élément fonctionnel (10 ; 101) et/ou dans la zone du tronçon cylindrique (38 ; 138), et **en ce que** lors de la mise en forme de la pièce métallique (12) pour former la feuillure annulaire (80) ou lors du pressage à plat de la feuillure annulaire, il résulte un engagement mutuel de la pièce métallique et des caractéristiques de forme de blocage anti-rotation.

4. Procédé selon la revendication 1, **caractérisé en ce que** le soutien de l'élément fonctionnel (10 ; 101) est assuré par un poinçon (60) prévu dans la matrice, et **en ce qu'**après la première phase de l'opération de mise en forme, on permet un recul du poinçon, suite à quoi s'effectue la seconde phase de l'opération de mise en forme entre la matrice (26) entourant le poinçon et la pièce métallique (12) chargée par le fluide sous pression.

5. Procédé selon la revendication 4, **caractérisé en ce que** le poinçon (60) est soutenu par une force de ressort (62) et **en ce que** le recul du poinçon s'effectue par réduction de la force de ressort.

6. Procédé selon la revendication 4, **caractérisé en ce que** le poinçon (60) est soutenu par une force de ressort, et **en ce que** le recul du poinçon s'effectue par augmentation de la pression du fluide agissant sur la pièce métallique (12).

7. Procédé selon l'une des revendications précédentes 1 à 4, **caractérisé en ce que** le soutien de l'élément fonctionnel (10 ; 101) est assuré par la matrice (26), et **en ce que** la seconde phase de l'opération de mise en forme s'effectue par augmentation de la pression du fluide agissant sur la pièce métallique (12).

8. Procédé selon l'une des revendications 1 à 4, **caractérisé en ce que** la matrice (26) est précontrainte sur la surface de mise en forme (50) par une force en direction de la pièce métallique, et **en ce que** pour la mise en oeuvre de la seconde phase de l'opération de mise en forme, on augmente la force de précontrainte agissant sur la surface de mise en forme (50) de la matrice et la pression du fluide agissant sur la pièce métallique (12).

9. Procédé selon l'une des revendications précédentes, **caractérisé en ce que** pour la mise en oeuvre de la seconde phase de l'opération de mise en forme, on utilise un outil qui est pressé sur la pièce métallique (12) prenant appui contre la face frontale de l'élément fonctionnel (10 ; 101), afin de générer une force de mise en forme mécaniquement accrue.

10. Procédé selon l'une des revendications précédentes, **caractérisé en ce que** l'élément fonctionnel (101) est un élément goujon comportant une partie tête (102) et une partie tige (104), **en ce que** dans la première phase de l'opération de mise en forme la pièce métallique (12) est mise en forme autour de la partie tête (102) de l'élément goujon, et **en ce que** la partie tige (104) de l'élément fonctionnel (101) est guidée de façon mobile en direction axiale (22) dans un perçage (109) de la matrice (26), le perçage étant ménagé concentriquement à la surface de mise en forme (50) de la matrice.

11. Procédé selon la revendication 10, **caractérisé en ce que** l'élément fonctionnel (101) est soutenu à l'extrémité frontale libre (106) de la partie tige (104).

12. Procédé selon l'une des revendications 1 à 10, **caractérisé en ce que** l'élément fonctionnel (10) est un élément creux présentant un perçage longitudinal (14), comme par exemple un élément femelle, et **en ce qu'**il est prévu un élément de soutien (60), par exemple un poinçon, qui s'étend depuis le côté matrice à travers l'élément creux (10) jusqu'à sa face frontale (18) prenant appui contre la pièce métallique (12) et qui soutient ici la pièce métallique au moins pendant la première phase de l'opération de mise en forme.

13. Procédé selon la revendication 12, **caractérisé en ce que** dans la seconde phase de l'opération de mise en forme, le poinçon (60) est retiré, suite à quoi la pièce métallique (12) est séparée sur la face frontale (18) de l'élément creux (10) dans la zone du perçage longitudinal (14) sous l'effet de la pression de fluide agissant sur la pièce métallique, pour former une pastille extractible (82).

14. Procédé selon la revendication 13, **caractérisé en ce que** le perçage longitudinal (14) de l'élément creux est réalisé sous la forme d'un perçage en gradins (14, 90), présentant un tronçon (90) de diamètre plus grand au voisinage de la face frontale (18) de l'élément creux (10), le matériau de la pièce métallique (12) étant mis en forme dans le perçage en gradins (14 ; 90) dans la zone du grand diamètre pendant l'opération de mise en forme, et formant ici une collerette (97) qui présente un diamètre intérieur qui permet le passage de la partie tige d'un goujon qui est menée à travers le perçage longitudinal (14, 90).

15. Procédé selon la revendication 14, **caractérisé en ce que** la face frontale libre (71) du poinçon (60) est réalisée avec une pointe (96) pour affaiblir le métal de la pièce métallique (12) pendant l'opération de mise en forme et pour permettre la mise en forme dans le perçage à gradins (14, 90).

16. Procédé selon l'une des revendications précédentes, **caractérisé en ce que** la face frontale (71) du poinçon (60) tournée vers la pièce métallique (12) est pourvue d'un renfoncement (94), afin de permettre, lors de l'extraction d'une pastille (82), son introduction dans le renfoncement (94) du poinçon (60) par la pression du fluide, dont résulte une réduction diamétrale de la pastille (82) et celle-ci se laisse plus facilement enlever hors l'outil.

17. Procédé selon l'une des revendications 1 à 12, **caractérisé en ce que** le poinçon (60) présente à son extrémité frontale libre (71) une conformation convexe (86), par exemple un arrondi hémisphérique qui, pendant l'opération de mise en forme, dépasse au-delà de la face frontale (18) de l'élément fonctionnel (10) et qui mène à un formage correspondant (88) de la pièce métallique (12), ce pourquoi, à la suite du perçage longitudinal (14) de l'élément fonctionnel, il se présente dans la pièce métallique (12) un logement (88) pour la pointe d'un élément goujon.

18. Procédé selon l'une des revendications précédentes, **caractérisé en ce que** l'élément fonctionnel (10 ; 101) est pourvu, sur sa face frontale (18) tournée vers la pièce métallique (12), d'une transition fortement arrondie (32) depuis la face frontale (18 ; 118) vers sa surface enveloppe (30 ; 130), autour de laquelle est rabattue la pièce métallique sans la couper.

19. Procédé selon l'une des revendications précédentes, **caractérisé en ce que** la pièce métallique est une structure creuse qui est sollicitée par une pression de fluide sur le côté intérieur et qui est soutenue sur l'un des côtés extérieurs dans un logement adapté d'un outil et sur le côté extérieur opposé par la matrice ou par un outil entourant celle-ci.

20. Procédé selon l'une des revendications 1 à 18, **caractérisé en ce que** la pièce métallique (12) est une pièce en tôle qui est poussée par un outil (72) sur le côté de la pièce en tôle détourné de l'élément fonctionnel, et **en ce qu'**une cavité (76) est prévue dans cet outil, qui est sollicitée en pression pour mettre en oeuvre l'opération de mise en forme.

21. Procédé selon la revendication 20, **caractérisé en ce que** l'outil (72) pousse la pièce en tôle (12) contre la face frontale de la matrice (26) ou contre un outil (24) entourant la matrice (26), et exerce ainsi une fonction de maintien vers le bas.

22. Composant d'assemblage constitué par un élément fonctionnel (10 ; 101) monté sur une pièce métallique (12) déformable, dans lequel la pièce métallique (12) prend appui contre une face frontale (18 ; 118) de l'élément fonctionnel (10 ; 101), est guidée autour d'un tronçon de l'élément fonctionnel (30 ; 102) au voisinage de la face frontale (18) et se transforme en une feuillure annulaire (80') dirigée radialement vers l'intérieur sur une surface (34 ; 134) de l'élément fonctionnel, qui s'étend radialement vers l'intérieur et qui est détournée de la face frontale (18 ; 118), en appui contre la pièce métallique (12), de l'élément fonctionnel, **caractérisé en ce que** la feuillure annulaire (80') est pressée à plat dans la zone de la surface (149 ; 134) de l'élément fonctionnel (10 ; 101), laquelle s'étend radialement vers l'intérieur.

23. Composant d'assemblage selon la revendication 22, **caractérisé en ce que** la feuillure annulaire (80') pressée à plat est agencée entre la surface (34 ; 134), s'étendant radialement vers l'intérieur, de l'élément fonctionnel (10 ; 101) et une surface, s'étendant radialement vers l'extérieur, d'un tronçon cylindrique mis en forme (38 ; 138) de l'élément fonctionnel.

24. Composant d'assemblage selon l'une ou l'autre des revendications 22 et 23, **caractérisé en ce que** des caractéristiques de forme (46 ; 146) qui forment un blocage anti-rotation entre l'élément fonctionnel (10 ; 101) et la pièce métallique (12) se trouvent dans sa zone de la surface (34 ; 134), s'étendant radialement vers l'intérieur, de l'élément fonctionnel et/ou dans la zone du tronçon cylindrique (38 ; 138), les caractéristiques de forma (46 ; 146) et la pièce métallique s'engageant mutuellement dans la zone de la feuillure annulaire (80') pressée à plat.

25. Composant d'assemblage selon l'une des revendications 22 à 24, **caractérisé en ce que** la surface enveloppe (30 ; 130) du tronçon (28 ; 102), entouré par la pièce métallique (12), de l'élément fonctionnel (10 ; 101) est munie de creux ou de bossages qui sont de préférence arrondis pour assurer un blocage anti-rotation entre l'élément fonctionnel et la pièce métallique.

26. Composant d'assemblage selon l'une des revendications 22 à 25, **caractérisé en ce que** l'élément fonctionnel est un élément goujon (101) comportant une partie tête (102) formant ledit tronçon et une partie tige (104).

27. Composant d'assemblage selon l'une des revendications 22 à 25, **caractérisé en ce que** l'élément fonctionnel est un élément creux (10), comme par exemple un élément femelle.

28. Composant d'assemblage selon la revendication 27, **caractérisé en ce que** la pièce métallique (12) présente une perforation dans la zone de la face frontale (18) de l'élément fonctionnel creux.

29. Composant d'assemblage selon la revendication 28, **caractérisé en ce que** dans la zone de la face frontale (18) de l'élément fonctionnel, le matériau de la pièce métallique est mis en forme dans un perçage en gradins (90) de l'élément fonctionnel (10).

30. Composant d'assemblage selon l'une des revendications 22 à 29, **caractérisé en ce que** des caractéristiques de blocage anti-rotation se trouvent dans la zone de la face frontale de l'élément fonctionnel ou dans un perçage en gradins optionnel qui y est prévu.

31. Composant d'assemblage selon l'une des revendications 22 à 30, **caractérisé en ce que** la zone mise en forme du tronçon cylindrique (38 ; 138) sur le côté détourné de la pièce métallique (12) s'étend au moins sensiblement radialement à l'axe longitudinal (22) de l'élément fonctionnel (10 ; 101), se transforme en une zone correspondante de la pièce métallique qui s'étend radialement, et se trouve conjointement avec celle-ci dans un plan radial.
